# EUROPÄISCHE PATENTANMELDUNG

(11) **EP 2 602 679 A1**
(43) Veröffentlichungstag der Anmeldung: **12.06.2013**
(21) Anmeldenummer: 11401661.1
(22) Anmeldetag: 08.12.2011
(51) Int. Cl.: G05B 19/10, G05B 15/02

(54) **Bedienelement für ein Haushaltsgerät, Bedieneinheit eines Haushaltsgeräts zur Aufnahme eines solchen Bedienelements und Haushaltsgerät mit einer solchen Bedieneinheit und einem solchen Bedienelement**

(71) Anmelder: Miele & Cie. KG, 33332 Gütersloh (DE)
(72) Erfinder: Bugár, Edina, 1022 Budapest Hungary (HU); Castelli, Giovanni, Busto Arsizio (VA) 21052 Italy (IT); Stahl, Matthias, 33813 Oerlinghausen (DE)

(57) **Zusammenfassung**

Die Erfindung betrifft ein Bedienelement (14) für ein insbesondere stationäres Haushaltsgerät (10) mit einem Basisteil (20) und einem relativ zum Basisteil (20) beweglichen, insbesondere drehbaren Bedienteil (22), wobei das Basisteil (20) einen Projektor (28) und einen Sensor (32) umfasst, wobei der Projektor (28) zur Darstellung eines Auswahlmenues (34) in Abhängigkeit von einer Stellung des Bedienteils (22) und in räumlicher Nähe zum Bedienelement (14) vorgesehen und ausgeführt ist und wobei mit dem Sensor (32) eine Auswahl innerhalb des Auswahlmenues (34) erfassbar ist, sowie eine Bedieneinheit (12) mit einem solchen Bedienelement (14) und ein Haushaltsgerät (10) mit einer solchen Bedieneinheit (12) oder einem solchen Bedienelement (14).

## Beschreibung

Bedienelement für ein Haushaltsgerät, Bedieneinheit eines Haushaltsgeräts zur Aufnahme eines solchen Bedienelements und Haushaltsgerät mit einer solchen Bedieneinheit und einem solchen Bedienelement.

Die Erfindung betrifft eine im Folgenden als Bedienelement bezeichnete Vorrichtung zum Bedienen eines Haushaltsgeräts, insbesondere eines stationären Haushaltsgeräts, wie zum Beispiel einen Waschautomaten, einen Geschirrspüler oder dergleichen. Die Erfindung betrifft des Weiteren eine Bedieneinheit eines Haushaltsgeräts zur Aufnahme eines solchen Bedienelements und schließlich auch ein Haushaltsgerät mit einer solchen Bedieneinheit und einem solchen Bedienelement.

Vorrichtungen zum Bedienen von Haushaltsgeräten sind an sich bekannt. Üblich ist zum Beispiel bei Waschautomaten oder Geschirrspülern eine Bedieneinheit mit einem Programmwahlschalter und einem oder mehreren Schaltern oder Tastern und dergleichen. Aus der EP 1 814 003 A1 ist ein Haushaltsgerät bekannt, bei dem zum Bedienen des Haushaltsgeräts mit einer Anzeigevorrichtung eine Projektion einer virtuellen Betätigungsfläche erfolgt, deren Betätigung durch einen Benutzer mittels einer Erfassungseinrichtung berührungslos erfassbar ist.

Eine Aufgabe der Erfindung besteht darin, weitere Möglichkeiten zum Bedienen eines Haushaltsgeräts anzugeben, insbesondere solche Möglichkeiten, die für einen Benutzer des jeweiligen Haushaltsgeräts besonders einfach und übersichtlich sind.

Erfindungsgemäß wird diese Aufgabe durch ein Bedienelement mit den Merkmalen des Patentanspruchs 1 gelöst. Dabei ist bei einem Bedienelement für ein insbesondere stationäres Haushaltsgerät der eingangs genannten Art vorgesehen, dass das Bedienelement ein Basisteil und ein relativ zum Basisteil bewegliches, insbesondere drehbares Bedienteil umfasst, dass das Basisteil einen Projektor sowie zumindest einen Sensor umfasst, dass der Projektor zur Darstellung eines Auswahlmenues in Abhängigkeit von einer Stellung des Bedienteils und in räumlicher Nähe zum Bedienelement vorgesehen und ausgeführt ist und dass mit dem Sensor eine Auswahl innerhalb des Auswahlmenues erfassbar ist.

Im Gegensatz zu der in der oben genannten EP 1 814 003 A1 vorgeschlagenen Lösung ist also vorgesehen, dass das Bedienelement ein Basisteil umfasst und dass der Projektor und der oder jeder Sensor dem Basisteil zugeordnet sind und dass das Bedienelement ein Bedienteil umfasst, durch dessen Stellung unterschiedliche Auswahlmenues zur Darstellung abrufbar sind. Des Weiteren kann vorgesehen sein, dass das Bedienelement vom jeweiligen Haushaltsgerät entfernbar und entfernt vom Haushaltsgerät zur Auswahl und/oder Beeinflussung zumindest einer Gerätefunktion des Haushaltsgeräts verwendbar ist.

Vorteilhafte Ausgestaltungen und Weiterbildungen der Erfindung ergeben sich aus den nachfolgenden Unteransprüchen. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bei einer Ausführungsform des Bedienelements umfasst dieses Mittel zur Erfassung einer Stellung des Bedienteils sowie Mittel zur Selektion eines Auswahlmenues und zur Ansteuerung des Projektors zur Darstellung des selektierten Auswahlmenues. Als Mittel zur Erfassung einer Stellung des Bedienteils kommt speziell bei einem drehbaren Bedienteil eine grundsätzlich an sich bekannte Schaltung mit einem Potentiometer oder einem sogenannten Inkrementalgeber in Betracht. Als Mittel zur Selektion eines Auswahlmenues und zur entsprechenden Ansteuerung des Projektors kommt eine in Software und/oder Hard- oder Firmware ausgeführte Funktionalität in Betracht. Diese vergleicht ein zum Beispiel von einem Inkrementalgeber generiertes Eingangssignal, das eine Stellung des Bedienteils kodiert, mit vorgegebenen und mögliche unterschiedliche Stellungen des Bedienteils kodierenden Werten oder Wertebereichen, um ein mit der jeweiligen Stellung des Bedienteils korreliertes Signal oder einen entsprechenden, intern verarbeitbaren Wert zu generieren. Mit dem Signal oder internen Wert kann dann in einem Speicher mit dort vorgehaltenen Daten für eine Mehrzahl von Auswahlmenues die Selektion des durch die Stellung des Bedienteils bestimmten Auswahlmenues erfolgen. Dessen Daten werden dem Projektor zugeführt, so dass sich eine bildliche Darstellung des Auswahlmenues ergibt.

Bei einer besonderen Ausführungsform des Bedienelements fungiert als Sensor zur Erfassung einer Auswahl innerhalb des jeweils dargestellten Auswahlmenues eine Kamera, wobei eine Auswahl innerhalb des Auswahlmenues durch eine Bildverarbeitung eines von der Kamera aufgenommenen Kamerabilds erfassbar ist. Speziell wenn sich der Projektor und die Kamera am Basisteil des Bedienelements in eng benachbarter Position zueinander befinden, kann davon ausgegangen werden, dass das Kamerabild im Wesentlichen dem vom Projektor als Auswahlmenue dargestellten Bild entspricht. Wenn demnach keine oder nur geringe Abweichungen zwischen dem Kamerabild und dem vom Projektor als Auswahlmenue dargestellten Bild bestehen, kann dies als Anhalt dafür genommen werden, dass sich kein Finger und keine Hand des Benutzers im Bereich des projizierten Bildes befinden. Wenn der Benutzer dagegen mit seinem Finger oder seiner Hand eine Auswahl vornehmen will, befindet sich der Finger oder die Hand im Bereicht des aufgenommenen Bildes und es ergeben sich merkliche Unterschiede zwischen dem Kamerabild und dem vom Projektor als Auswahlmenue dargestellten Bild. Näherungsweise ist dann eine Bildverarbeitungsoperation nach Art einer Bildsubtraktion ausreichend, um durch eine solche Subtraktion des Auswahlmenues von dem aufgenommenen Kamerabild Informationen darüber zu erhalten, in welchem Bereich des Auswahlmenues sich ein Finger oder eine Hand des Benutzers befindet. Weil der räumliche Abstand von Projektor und Kamera am oder im Basisteil bekannt und konstant ist, kann dieser räumliche Abstand auch verwendet werden, um Abweichungen zwischen Auswahlmenue und Kamerabild aufgrund unterschiedlicher Neigungen des jeweiligen Strahlengangs zu kompensieren.

In Fortführung dieser Überlegungen kann auch vorgesehen sein, dass bei einem entfernt vom Haushaltsgerät verwendbaren Bedienelement, wenn also das Auswahlmenue auf eine Küchenarbeitsfläche als Beispiel für einen Ort, an dem das Bedienelement verwendet werden kann, projiziert wird, eine Funktionalität des Bedienelements einen Vergleich des projizierten Auswahlmenues und des aufgenommenen Kamerabilds durchführt, um den Benutzer über nicht verwendbare Projektionsflächen oder ungünstige Aufstellungsorte zu informieren. Zum Beispiel kann eine stark strukturierte Oberfläche die Auswertung des Kamerabilds erschweren. Bei einer Subtraktion des projizierten Bildes vom Kamerabild (oder umgekehrt) ergeben sich damit in allen Bereichen durch die Oberflächenstruktur der Projektionsfläche bedingte Abweichungen. Wenn die Abweichungen einen bestimmten Schwellwert überschreiten, sind Abweichungen aufgrund der Oberflächenstruktur der Projektionsfläche nur schwer von Abweichungen aufgrund von Bedienhandlungen des Benutzers unterscheidbar. Eine ungeeignete Oberfläche kann mithin also bereits bevor der Benutzer versucht, Bedienhandlungen vorzunehmen, erkannt werden. Der Benutzer wird auf diesen Umstand durch ein vom Bedienelement generiertes, optisches oder akustisches Signal hingewiesen und der Benutzer kann daraufhin einen besser geeigneten Aufstellungsort für das Bedienelement suchen. Ebenso kann bei einer nicht ebenen Oberfläche die Darstellung des Auswahlmenues und/oder die Auswertung des Kamerabilds erschwert sein. Speziell bei einer nicht ebenen Projektionsfläche kommt es zu Verzerrungen des projizierten Bildes und dementsprechend bei einer Subtraktion des projizierten Bildes vom Kamerabild (oder umgekehrt) zu unter Umständen erheblichen Abweichungen, welche die Erkennung von Bedienhandlungen erschweren oder unmöglich machen können. Auch in einer solchen Situation kann der Benutzer auf den ungünstigen Aufstellungsort der Bedieneinheit durch ein optisches oder akustisches Signal hingewiesen werden. Gleiches gilt, wenn das Bedienelement nicht eben auf der Oberfläche aufgesetzt ist und es damit zu einer Verzerrung des projizierten Auswahlmenues kommt. Zur Erkennung einer Auswahl innerhalb eines Auswahlmenues, also letztlich die Erkennung einer Position eines Fingers oder einer Hand des Benutzers in Relation zum projizierten Auswahlmenue, können auch andere Bildverarbeitungsfunktionen verwendet werden, zum Beispiel Verfahren und Funktionen der sogenannten morphologischen Bildverarbeitung.

Bei einer Ausführungsform des Bedienelements fungiert als Sensor oder Sensorik zur Erfassung einer Auswahl innerhalb des Auswahlmenues eine Gruppe von elektromagnetischen Sensoren, die jeweils in unterschiedliche radiale Richtungen orientiert sind. Solche Sensoren fungieren jeweils nach dem Prinzip eines an sich bekannten Bewegungsmelders. Dabei werden elektromagnetischen Wellen (Dopplerradar), Ultraschall (Ultraschall-Bewegungsmelder) oder Infrarotstrahlung oder Kombinationen emittiert und Reflektionen detektiert, um ein Hindernis, eine Bewegung oder eine Wärmequelle im Erfassungsbereich zu erkennen. Dadurch, dass eine Gruppe solcher Sensoren verwendet wird und die einzelnen Sensoren jeweils in unterschiedliche radiale Richtungen orientiert sind, lässt sich eine Position eines Fingers oder einer Hand des Benutzers als Bedienhandlung erfassen.

Ein Bedienelement wie hier und nachfolgend beschrieben kommt zur Verwendung mit einer Bedieneinheit eines stationäres Haushaltsgeräts der eingangs genannten Art in Betracht, wenn die Bedieneinheit eine Aufnahmeposition für ein solches Bedienelement aufweist und das Bedienelement an oder in der Aufnahmeposition anbringbar ist. Im in oder an der Bedieneinheit angebrachten Zustand kann zum Beispiel eine vom Bedienelement umfasst Energiequelle, also zum Beispiel ein Akkumulator, geladen werden.

Eine besondere Ausführungsform zeichnet sich dabei dadurch aus, dass das Bedienelement in der Aufnahmeposition lösbar gehalten wird, insbesondere magnetisch gehalten wird. Eine lösbare Halterung, zum Beispiel auf Basis einer Rastverbindung, ermöglicht einen sicheren Kontakt zwischen Bedieneinheit und Bedienelement, wie sie zum Beispiel zum induktiven Laden eines vom Bedienelement umfassten Akkumulators erforderlich ist. Wenn die lösbare Halterung auf magnetischer Basis erfolgt, ergibt sich der Vorteil, dass die bei der Halterung des Bedienelements an der Bedieneinheit betroffenen Flächenabschnitte sowohl des Bedienelements wie auch der Bedieneinheit eben oder zumindest kantenfrei sein können, was die optische Anmutung beider Teile und speziell auch die Möglichkeiten für deren Reinigung verbessert. Zudem bringt eine lösbare Halterung auf magnetischer Basis einen für den Benutzer angenehmen Bedieneffekt mit sich, indem ab einer gewissen räumlichen Nähe zwischen Bedienelement und Aufnahmeposition das Bedienelement quasi selbst seine Aufnahmeposition findet und indem beim Abnehmen des Bedienelements von der Aufnahmeposition zunächst ein anfänglicher Widerstand überwunden werden muss, der aber nicht, wie zum Beispiel bei einem Rastelement, von einer mechanischen Verformung oder dergleichen herrührt. Insgesamt ergibt sich bei einer magnetischen Halterung des Bedienelements in der an der Bedieneinheit gebildeten Aufnahmeposition eine besonders hohe Wertigkeit der involvierten Komponenten und des damit realisierten Bedienkonzepts.

Bei einem ein Bedienelement und eine Bedieneinheit wie hier und nachfolgend beschrieben umfassenden System kann vorgesehen sein, dass die Bedieneinheit eine Senderspule und das Bedienelement eine Empfängerspule aufweist, dass zur elektrischen Energieversorgung der Bedieneinheit eine Übertragung elektrischer Energie von der Senderspule an die Empfängerspule erfolgt und dass die Empfängerspule Teil eines Stromkreises mit einem elektrischen Energiespeicher, also zum Beispiel einem Akkumulator, ist, so dass durch einen Stromfluss durch die Senderspule ein Stromfluss in die Empfängerspule induziert wird und dieser Stromfluss zum Laden des elektrischen Energiespeichers des Bedienelements wirksam ist. Das Laden des elektrischen Energiespeichers kann somit erfolgen, ohne dass auf Seiten der Bedieneinheit oder des Bedienelements elektrische Kontakte erforderlich sind.

Über einen solchen drahtlosen Energiepfad können auch, zum Beispiel durch Modulation des von der Senderspule abgestrahlten elektrischen Feldes, Daten zum Bedienelement übermittelt werden, nämlich zum Beispiel Bilddaten für die Auswahlmenues, die in einem nichtflüchtigen Speicher des Bedienelements vorgehalten werden. Durch eine geeignete Sensorik lässt sich sicherstellen, dass die Senderspule zur Energieübertragung oder zur Energie- und Datenübertragung nur aktiv ist, wenn sich die Bedieneinheit in der Aufnahmeposition befindet. In dieser Hinsicht kommt zum Beispiel ein sogenannter Reed-Kontakt oder ein Hallsensor in Betracht, die bekanntlich durch Magnetfelder beeinflussbar sind, so dass ein zur lösbaren Halterung auf magnetischer Basis vorgesehener Permanentmagnet im Bedienelement durch einen Reed-Kontakt oder Hallsensor erfasst werden und damit ein Stromkreis zur Aktivierung der Senderspule geschlossen werden kann.

Eine besondere Ausführungsform eines Systems mit einem Bedienelement und einer Bedieneinheit, bei dem das Bedienelement von der Bedieneinheit lösbar und entfernt von der Bedieneinheit verwendbar ist, zeichnet sich dadurch aus, dass im Falle einer von der Bedieneinheit entfernten Verwendung Bedienhandlungen kodierende Daten vom Bedienelement zur Bedieneinheit übermittelbar sind, insbesondere auf leitungslosem Wege. Das Bedienelement wird damit gleichsam zu einer Fernbedienung für das jeweilige Haushaltsgerät und die Bedieneinheit fungiert im Wesentlichen als Empfangsstation für vom Bedienelement übermittelte, Bedienhandlungen kodierende Daten. Eine an einer Außenseite des Haushaltsgeräts sichtbare Oberfläche der Bedieneinheit kann damit im Extremfall auf eine ausreichende Größe zur Bereitstellung einer Aufnahmeposition für das Bedienelement reduziert sein. Der so eingesparte, bisher für an der Bedieneinheit vorgesehene Schalter, Tasten, Programmwahlschalter und dergleichen benötigte Platz kann anderweitig genutzt werden.

Bei einer besonderen Ausführungsform eines Systems mit einem Bedienelement und einer Bedieneinheit, bei dem das Bedienelement von der Bedieneinheit lösbar und entfernt von der Bedieneinheit verwendbar ist, umfassen die Bedieneinheit und das Bedienelement jeweils eine Sende- und/oder Empfangseinrichtung zur drahtlosen Kommunikation zwischen Bedieneinheit und Bedienelement. Für die drahtlose Kommunikation kommen zum Beispiel eine Funkverbindung und als Datenübertragungsprotokoll eine Übertragung nach dem unter der Bezeichnung ZigBee bekannten Standard in Betracht. Alternativ käme auch eine Verwendung bestehender Elektroinstallation am Aufstellungsort des jeweiligen Haushaltsgeräts in Betracht und sodann eine Datenübertragung nach dem unter der Bezeichnung Inhouse-Powerline Communication bekannten Standard. Das jeweilige Haushaltsgerät erfordert für dessen Speisung mit elektrischer Energie ohnehin einen Anschluss an das jeweilige Hausnetz. Das Bedienelement kann, wenn dieses entsprechende Steckkontakte aufweist, ebenfalls in eine an das Hausnetz angeschlossene Steckdose eingesteckt werden, so dass eine Datenübertragung zwischen Bedienelement und Haushaltsgerät möglich ist, wobei eine Fläche neben oder über der jeweils verwendeten Steckdose als Projektionsfläche für das Auswahlmenue in Betracht kommt.

Die Erfindung ist damit insgesamt auch ein Haushaltsgerät der eingangs genannten Art mit einem Bedienelement und/oder einer Bedieneinheit wie hier und nachfolgend beschrieben.

Die mit der Erfindung und ihren Ausgestaltungen erreichbaren Vorteile bestehen vor allem in dem neuartigen Bedienkonzept, das es ermöglicht, eine Vielzahl von Bedienoptionen übersichtlich zu strukturieren und graphisch in Form von Projektionen darstellbaren Auswahlmenues zusammenzufassen. Bei der Gestaltung der Auswahlmenues sind kaum Grenzen gesetzt, so dass die Auswahlmenues Text und/oder Graphik, also zum Beispiel sogenannte Icons, umfassen können, so dass die Bedeutung der einzelnen, in einem Auswahlmenue zusammengefassten Auswahlmöglichkeiten schnell und intuitiv erfasst werden kann. Durch die Möglichkeit der graphischen Darstellung der Auswahlmenues sind auch kaum Grenzen hinsichtlich der Anzahl der zur Darstellung vorgesehenen Auswahlmenues gesetzt. Es besteht also keine besondere Notwendigkeit, nur wenige Auswahlmenues mit jeweils einer Vielzahl von Auswahlmöglichkeiten vorzusehen und es können im Gegenteil inhaltlich und funktionell zusammengehörige Auswahlmöglichkeiten in einer geeigneten Struktur hierarchisch organisierter Auswahlmenues zugänglich gemacht werden. Eine gleiche Vielfalt von Auswahlmöglichkeiten könnte auf konventiellem Wege nur durch eine entsprechende Vielzahl von Schaltelementen oder durch komplexe Schaltelemente realisiert werden, für die meist nicht in ausreichendem Maße Platz an einer Außenseite des jeweiligen Haushaltsgeräts zur Verfügung steht.

Ein Ausführungsbeispiel der Erfindung ist in den Zeichnungen rein schematisch dargestellt und wird nachfolgend näher beschrieben. Einander entsprechende Gegenstände oder Elemente sind in allen Figuren mit den gleichen Bezugszeichen versehen. Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

### Es zeigen

- Figur 1: und
- Figur 2: ein Haushaltsgerät mit einer Bedieneinheit und einem Bedienelement,
- Figur 3: ein von einer Bedieneinheit entferntes Bedienelement mit einer durch das Bedienelement bewirkten Darstellung eines Auswahlmenues,
- Figur 4: eine graphische Veranschaulichung einer hierarchischen Organisation einer Mehrzahl von Auswahlmenues,
- Figur 5: eine Momentaufnahme bei der Verwendung des Bedienelements mit einer Hand des Benutzers zur Betätigung des Bedienelements und einer weiteren Hand des Benutzers zur Tätigung einer Auswahl in einer Projektion eines Auswahlmenues,
- Figur 6: eine Sender- und eine Empfängerspule als Beispiel für eine leitungslose Energieversorgung des Bedienelements und
- Figur 7: Wirkzusammenhänge bei der Verwendung des Bedienelements.

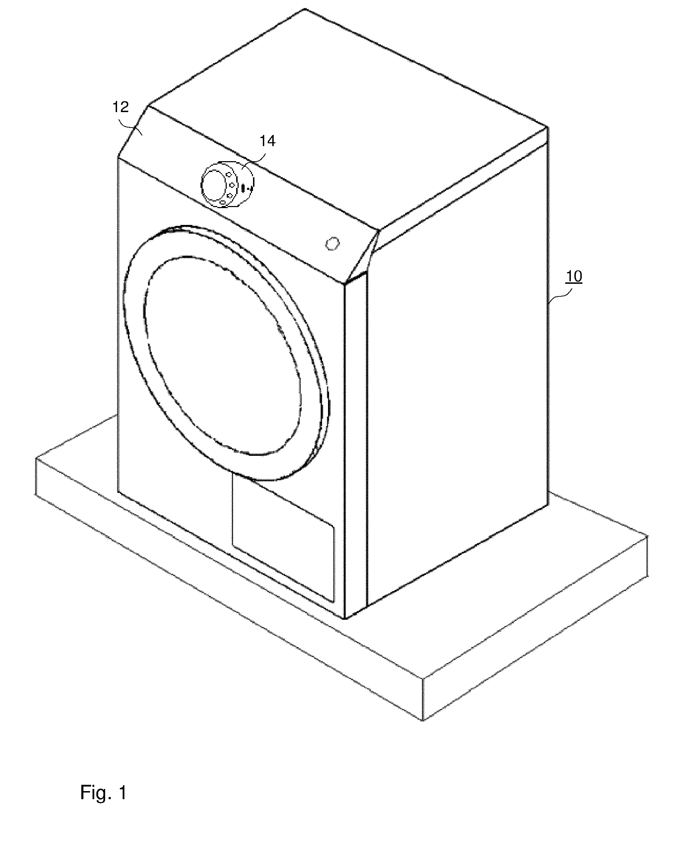

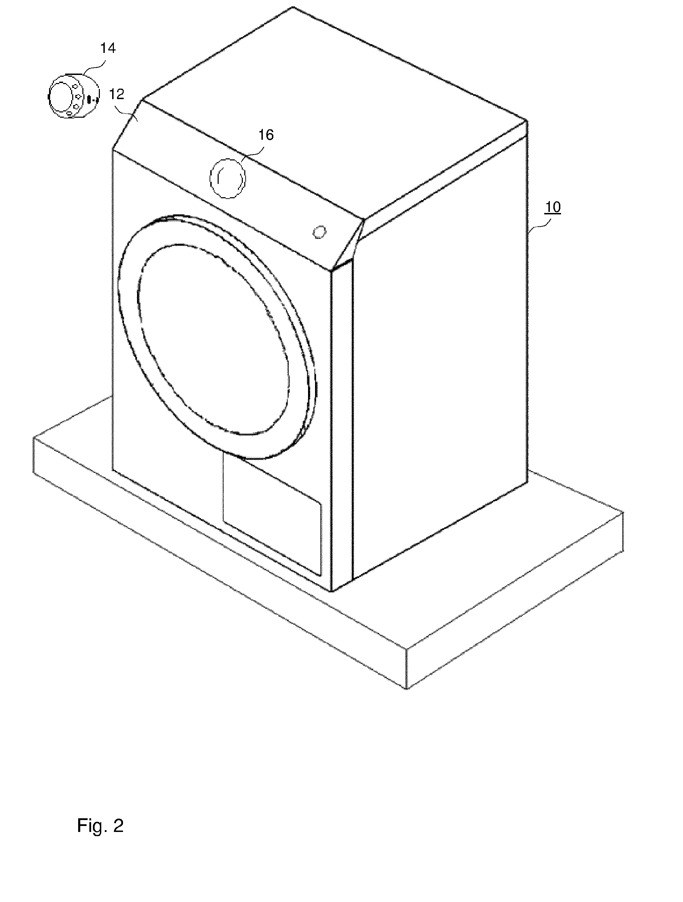

Figur 1 und Figur 2 zeigen jeweils als Beispiel für ein Haushaltsgerät 10 einen Waschautomaten. Das Haushaltsgerät 10 umfasst neben dem üblichen Komponenten, bei einem Waschautomaten also eine Waschtrommel, ein Antriebsaggregat und so weiter, eine Bedieneinheit 12 und ein Bedienelement 14.

Figur 2 zeigt, dass das Bedienelement 14 an der Bedieneinheit 12 entnehmbar ist und dass zur Aufnahme des Bedienelements 14 in der Bedieneinheit 12 eine Aufnahmeposition 16 gebildet ist.

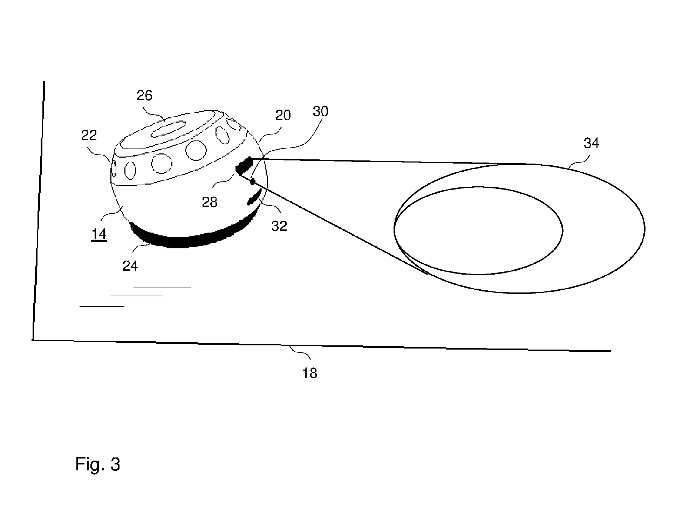

Figur 3 zeigt das an der Bedieneinheit 12 abgenommene Bedienelement 14 auf einer Arbeitsfläche 18, also zum Beispiel einem Tisch, einer Küchenarbeitsplatte oder dergleichen. In der im Vergleich zu Figur 1 und Figur 2 vergrößerten Darstellung des Bedienelements 14 ist erkennbar, dass dieses ein Basisteil 20 und ein Bedienteil 22 umfasst. Das Bedienteil 22 ist relativ zum Basisteil 20 beweglich. Dargestellt ist eine Ausführungsform des Bedienelements 14, bei dem das Bedienteil 22 relativ zum Basisteil 20 drehbar ist. Bei der dargestellten Ausführungsform hat das Bedienelements 14 eine im Wesentlichen kugelförmige Gestalt mit einer als Boden fungierenden Flachstelle und einer durch eine Oberseite des Bedienteils 22 gebildeten weiteren Flachstelle. Das Bedienteil 22 hat damit eine kreisförmige Grundkontur und ansonsten die Form einer Kugelscheibe. Regelmäßig auf der Umfangsfläche der kreisförmigen Grundkontur verteilt sind einzelne Vertiefungen vorgesehen, die eine angenehme und sichere Betätigung des Bedienteils 22 erleichtern sollen. An der als Boden fungierenden Flachstelle des Basisteils 20 kann sich eine Auflagefläche 24, also zum Beispiel eine Gummiplatte, befinden. Eine solche Auflagefläche sorgt für einen sicheren und im Wesentlichen rutschfreien Stand des Basisteils 20 auf der jeweiligen Arbeitsfläche 18.

Im Zentrum einer Oberseite des Bedienteils 22 ist ein Taster 26 gezeigt, der zum Beispiel als Alarmknopf fungiert und eine schnelle Abschaltung des jeweiligen Haushaltsgeräts 10 oder eine Überführung des Haushaltsgeräts 10 in einen sicheren Zustand erlaubt. Im Basisteil 20 befinden sich ein Projektor sowie eine Kamera und/oder ein oder mehrere Sensoren. Der Projektor und die Kamera oder eine sonstige Sensorik sind in der Darstellung nicht erkennbar, weil sich die jeweiligen Einheiten im Inneren des Basisteils 20 befinden und dieses damit für diese Einheiten als Gehäuse fungiert. Sichtbar sind allerdings eine erste, zweite und dritte Öffnung 28, 30, 32 jeweils für einen Strahlgang von oder für eine solche Einheit. Jede Einheit kann sich auch unmittelbar in einer solchen Öffnung 28-32 befinden und jede Öffnung 28-32 ist mit einem für die jeweiligen Strahlen durchgängigen Material, also zum Beispiel einem Glas- oder Kunststoffelement verschlossen. Zur besseren Unterscheidung der Öffnungen 28-32 wird auf diese im Folgenden auch unter Verwendung der Bezeichnungen der dort jeweils vorgesehenen Einheiten oder unter Verwendung der Bezeichnungen derjenigen Einheiten, für die oder von denen durch die jeweilige Öffnung 28-32 Strahlung einfällt, Bezug genommen. Die erste Öffnung 28, bei der angenommen werden soll, dass sich in dieser oder hinter dieser ein Projektor befindet, wird dementsprechend im Folgenden auch als Projektor 28 bezeichnet. Entsprechend wird die zweite Öffnung 30, bei der angenommen werden soll, dass sich in dieser oder hinter dieser eine Kamera befindet, im Folgenden auch als Kamera 30 und schließlich eine dritte Öffnung 32, bei der angenommen werden soll, dass sich in dieser oder hinter dieser eine eine Gruppe von Sensoren umfassende Sensorik befindet, auch als Sensorik 32 bezeichnet. Das Bedienelement 14 kann die Kamera 30 und die Sensorik 32 alternativ oder kumulativ umfassen. Jedenfalls sind entweder Kamera 30 oder Sensorik 32 zum Erfassen einer Bedienhandlung vorgesehen. Die Kamera 30 oder die Sensorik 32 oder die Kamera 30 und die Sensorik 32 können dementsprechend einzeln oder zusammen auch als Sensor zum Erfassen einer Bedienhandlung aufgefasst werden und entsprechend wird der Begriff Sensor als Oberbegriff für eine von dem Bedienelement 14 umfasste Kamera 30 oder eine von dem Bedienelement 14 umfasste Sensorik 32 oder eine vom dem Bedienelement 14 umfasste Kombination aus Kamera 30 und Sensorik 32 verwendet.

Zum Erfassen einer Bedienhandlung wird mit dem Projektor 28 ein Auswahlmenue 34 auf die Arbeitsfläche 18 projiziert. Mit der Kamera 30 kann ein Bild der Projektion aufgenommen und mit der Projektion, also dem jeweils dargestellten Auswahlmenue 34, verglichen werden. Abweichungen zwischen dem aufgenommenen Bild und dem projizierten Auswahlmenue 34 können zum Beispiel daher rühren, dass sich ein Finger oder eine Hand eines Benutzers in einem Bereich der Projektion befindet, so dass mit einer Ermittlung eines Orts, an dem diese Abweichungen festgestellt wurden, bereits eine Bedienhandlung des Benutzers erkannt ist.

Die Darstellung des Auswahlmenues 34 erfolgt mit dem Projektor 28 in räumlicher Nähe des Bedienelements 14 und die Darstellung des Auswahlmenues 34 erfolgt zumindest in Abhängigkeit von einer jeweiligen Stellung des Bedienteils 22. Durch unterschiedliche Stellungen des Bedienteils 22 können also unterschiedliche Auswahlmenues 34 selektiert und zur Anzeige gebracht werden. Das jeweils dargestellte Auswahlmenue 34 kann allerdings neben der Stellung des Bedienteils 22 von einem durch das Bedienelement 14 protokollierten Verlauf vorangehender Bedienhandlungen abhängen. Auf diese Weise lassen sich hierarchisch strukturierte Auswahlmenues 34 abrufen und zur Anzeige bringen. Zum Beispiel kann zunächst ein als Hauptmenue fungierendes Auswahlmenue 34 dargestellt werden, so dass alle später dargestellten Auswahlmenues 34 von einer im Hauptmenue oder in hierarchisch höher angeordneten Auswahlmenues 34 getroffenen Auswahl abhängen.

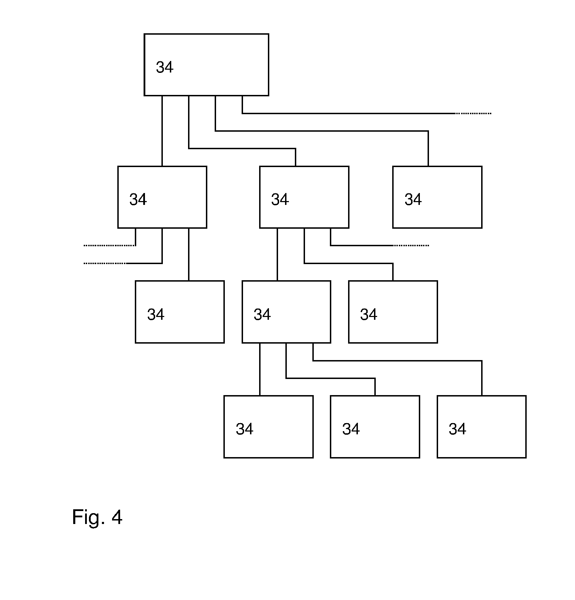

Figur 4 zeigt dazu schematisch stark vereinfacht eine willkürliche Menuestruktur mit einer hierarchisch organisierten Anordnung einer Mehrzahl von Auswahlmenues 34. Man erkennt bereits anhand der exemplarischen Darstellung die Mächtigkeit und die Vielseitigkeit, die aus einer hierarchischen Strukturierung der Auswahlmenues 34 resultiert.

Durch Drehung des Bedienteils 22 kann aus einer Mehrzahl von einer gleichen Hierarchieebene zugeordneten Auswahlmenues 34 jeweils eines ausgewählt werden. Alternativ kann auch vorgesehen sein, dass eine Drehung des Bedienteils 22 eine Rotation der von jeweils einem Auswahlmenue 34 umfassten Optionen bewirkt, so dass für eine Auswahl einer Option quasi abgewartet werden kann, bis die gewünschte Option an einer mit einem Finger des Bedieners günstig erreichbaren Position "vorbeikommt", um dann die Auswahl der Option durch eine entsprechende Bedienhandlung vorzunehmen.

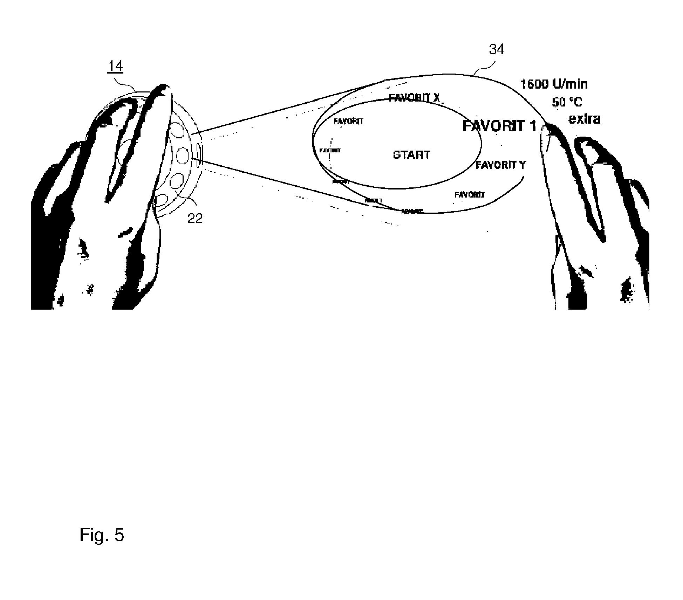

Figur 5 zeigt dazu eine Momentaufnahme bei der Verwendung des Bedienelements 14 durch einen Benutzer. Man erkennt, dass eine Hand des Benutzers das Bedienteil 22 des Bedienelements 14 betätigt. Das Bedienelement 14 projiziert ein Auswahlmenue 34 und in dem Auswahlmenue 34 trifft der Benutzer durch Bewegen seines Fingers oder einer Fingerspitze in den Bereich einer innerhalb des Auswahlmenues 34 definierten Auswahloption eine Auswahl.

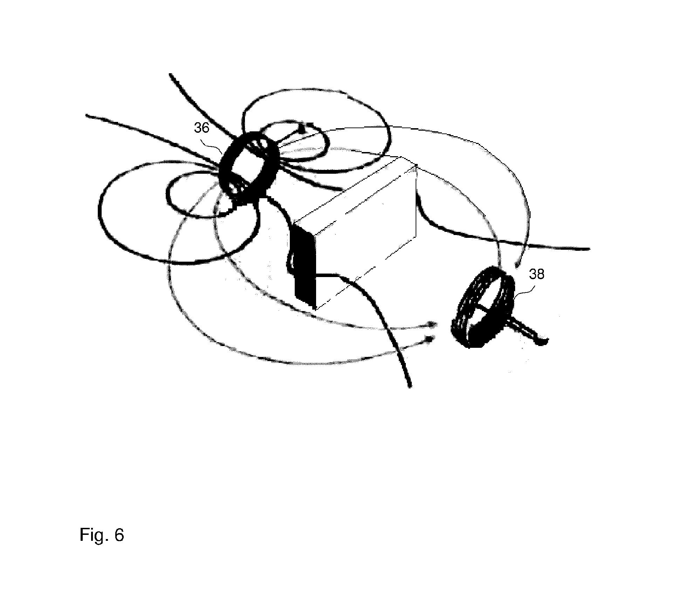

Figur 6 zeigt schematisch vereinfacht eine als Senderspule 36 fungierende erste Spule und eine als Empfängerspule 38 fungierende, komplementäre zweite Spule. Eine solche Empfängerspule 38 kann im Bedienelement 14 vorgesehen sein, um bei Stromfluss durch die Senderspule 36 einen Stromfluss in der Empfängerspule 38 zu indizieren und damit einen elektrischen Energiespeicher zur Versorgung des Bedienelements 14 mit elektrischer Energie, also zum Beispiel einen Akkumulator (nicht gezeigt), zu laden. Die Senderspule 36 befindet sich dann in der Bedieneinheit 12 des Haushaltsgeräts 10, vorzugsweise im Bereich der dort gebildeten Aufnahmeposition 16, so dass der Energiespeicher des Bedienelements 14 geladen werden kann, wenn das Bedienelement an der dafür vorgesehenen Aufnahmeposition 16 mit der Bedieneinheit 12 kombiniert ist.

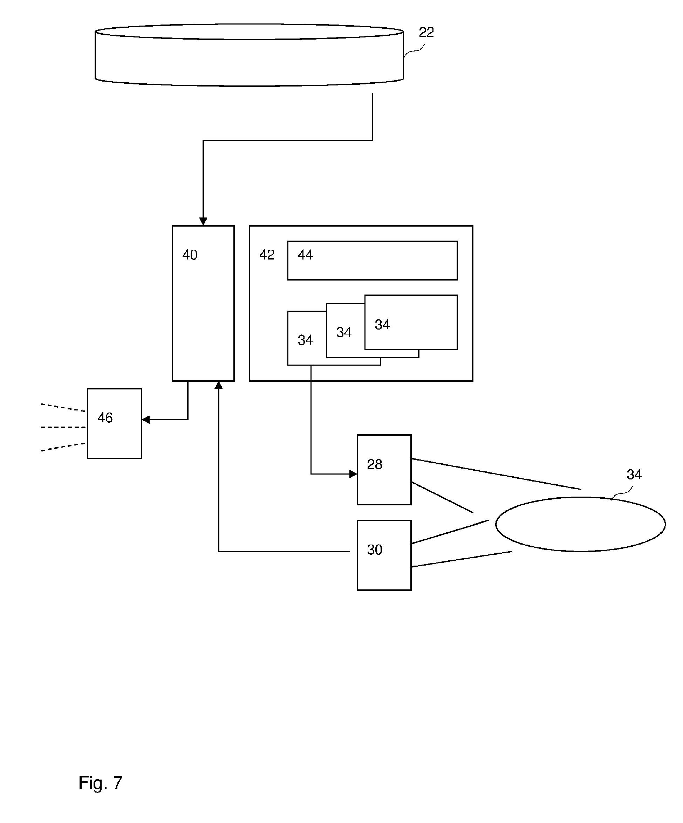

Figur 7 zeigt abschließend schematisch vereinfacht einzelne Wirkzusammenhänge bei der Verwendung des Bedienelements 14. Dieses umfasst in seinem Basisteil 20 eine Verarbeitungseinheit 40 in Form von oder nach Art eines Mikroprozessors und einen Speicher 42. In den Speicher 42 ist beim Betrieb des Bedienelements 14 ein Steuerungsprogramm 44 geladen, das die Funktionalität des Bedienelements 14 bestimmt. Gleichfalls im Speicher 42 befinden sich ein oder mehrere Auswahlmenues 34. Im Betrieb des Bedienelements 14 wird eine Position des Bedienteils 22 erfasst und entsprechend der erfassten Position ein Auswahlmenue 34 dargestellt. Der Darstellung des Auswahlmenues 34 erfolgt mit dem Projektor 28 und eventuelle Benutzerhandlungen im Bereich der Darstellung des Auswahlmenues werden mit einem geeigneten Sensor, zum Beispiel der Kamera 30, erfasst. Dafür wird das von der Kamera erfasste Bild des Auswahlmenues 34 mittels der Verarbeitungseinheit 40 analysiert. Bei einer erkannten Benutzerhandlung wird ein diesbezügliches Signal generiert und zum Beispiel mit einem Funksender 46 auf leitungslosem Wege an die Bedieneinheit 12 des Haushaltsgeräts 10 übermittelt, die zu diesem Zwecke einen geeigneten Empfänger (nicht dargestellt) aufweist und das empfangene Signal auswertet und entsprechende Aktionen in Bezug auf das Haushaltsgerät 10 veranlasst, zum Beispiel das Starten eines mit der Bedieneinheit 12 ausgewählten Waschprogramms.

## Patentansprüche

1. Bedienelement (14) für ein insbesondere stationäres Haushaltsgerät (10) mit einem Basisteil (20) und einem relativ zum Basisteil (20) beweglichen, insbesondere drehbaren Bedienteil (22),
wobei das Basisteil (20) einen Projektor (28) und einen Sensor (32) umfasst,
wobei der Projektor (28) zur Darstellung eines Auswahlmenues (34) in Abhängigkeit von einer Stellung des Bedienteils (22) und in räumlicher Nähe zum Bedienelement (14) vorgesehen und ausgeführt ist und
wobei mit dem Sensor (32) eine Auswahl innerhalb des Auswahlmenues (34) erfassbar ist.

2. Bedienelement (14) nach Anspruch 1, mit Mitteln zur Erfassung einer Stellung des Bedienteils (22) und Mitteln zur Selektion eines Auswahlmenues (34) und zur Ansteuerung des Projektors (28) zur Darstellung des selektierten Auswahlmenues (34).

3. Bedienelement (14) nach Anspruch 1 oder 2, wobei als Sensor (32) eine Kamera (30) fungiert und wobei eine Auswahl innerhalb des Auswahlmenues (34) durch eine Bildverarbeitung eines von der Kamera (34) aufgenommen Kamerabilds erfassbar ist.

4. Bedienelement (14) nach Anspruch 1 oder 2, wobei als Sensor (32) eine Gruppe von elektromagnetischen Sensoren fungiert, die jeweils in unterschiedliche radiale Richtungen orientiert sind.

5. Bedieneinheit (12) für ein stationäres Haushaltsgerät (10) mit einer Aufnahmeposition (16) für ein Bedienelement (14) nach einem der vorangehenden Ansprüche und mit einem an der Aufnahmeposition (16) anbringbaren derartigen Bedienelement (14).

6. Bedieneinheit (12) nach Anspruch 5, wobei das Bedienelement (14) in der Aufnahmeposition (16) lösbar gehalten wird, insbesondere magnetisch gehalten wird.

7. System mit einer Bedieneinheit (12) nach Anspruch 5 oder 6 und einem Bedienelement (14) nach einem der Ansprüche 1 bis 4, wobei die Bedieneinheit (12) eine Senderspule (36) und das Bedienelement (14) eine Empfängerspule (38) aufweist und wobei zur elektrischen Energieversorgung der Bedieneinheit (12) eine Übertragung elektrischer Energie von der Senderspule (36) an die Empfängerspule (38) erfolgt.

8. System nach Anspruch 7, wobei das Bedienelement (14) von der Bedieneinheit (12) lösbar und entfernt von der Bedieneinheit (12) verwendbar ist, wobei im Falle einer von der Bedieneinheit (12) entfernten Verwendung Bedienhandlungen kodierende Daten vom Bedienelement (14) zur Bedieneinheit (12) übermittelbar sind, insbesondere auf leitungslosem Wege.

9. System nach Anspruch 8, mit jeweils einer von der Bedieneinheit (12) und dem Bedienelement (14) umfassten Sende- und/oder Empfangseinrichtung (36, 38) zur drahtlosen Kommunikation zwischen Bedieneinheit (12) und Bedienelement (14).

10. Haushaltsgerät mit einem Bedienelement (14) nach einem der Ansprüche 1 bis 4 und/oder einer Bedieneinheit (12) nach einem der Ansprüche 5, 6 und/oder einem System nach einem der Ansprüche 7 bis 9.

## Geänderte Patentansprüche

### Geänderte Patentansprüche gemäss Regel 137(2) EPÜ.

**1.** Bedienelement (14) für ein stationäres Haushaltsgerät (10) mit einem Basisteil (20) und einem relativ zum Basisteil (20) beweglichen Bedienteil (22),
**dadurch gekennzeichnet,**
**dass** das Basisteil (20) einen Projektor (28) und einen Sensor (32) umfasst,
wobei der Projektor (28) zur Darstellung eines Auswahlmenues (34) in Form von Projektionen, in Abhängigkeit von einer Stellung des Bedienteils (22) und in räumlicher Nähe zum Bedienelement (14) vorgesehen und ausgeführt ist und
wobei mit dem Sensor (32) eine Auswahl innerhalb des Auswahlmenues (34) erfassbar ist.

**2.** Bedienelement (14) nach Anspruch 1,
wobei, das bewegliche Bedienteil (22) ein drehbares Bedienteil (22) ist,

**3.** Bedienelement (14) nach Anspruch 1 oder 2, mit Mitteln zur Erfassung einer Stellung des Bedienteils (22) und Mitteln zur Selektion eines Auswahlmenues (34) und zur Ansteuerung des Projektors (28) zur Darstellung des selektierten Auswahlmenues (34).

**4.** Bedienelement (14) nach Anspruch 1 oder 2, wobei als Sensor (32) eine Kamera (30) fungiert und wobei eine Auswahl innerhalb des Auswahlmenues (34) durch eine Bildverarbeitung eines von der Kamera (34) aufgenommen Kamerabilds erfassbar ist.

**5.** Bedienelement (14) nach Anspruch 1 oder 2, wobei als Sensor (32) eine Gruppe von elektromagnetischen Sensoren fungiert, die jeweils in unterschiedliche radiale Richtungen orientiert sind.

**6.** Bedieneinheit (12) für ein stationäres Haushaltsgerät (10) mit einer Aufnahmeposition (16) für ein Bedienelement (14) nach einem der vorangehenden Ansprüche und mit einem an der Aufnahmeposition (16) anbringbaren derartigen Bedienelement (14).

**7.** Bedieneinheit (12) nach Anspruch 6, wobei das Bedienelement (14) in der Aufnahmeposition (16) lösbar gehalten wird,

**8.** Bedieneinheit (12) nach Anspruch 6 oder 7,
**dadurch gekennzeichnet,**
**dass** das Bedienelement (14) in der Aufnahmeposition (16) magnetisch gehalten wird.

**9.** System mit einer Bedieneinheit (12) nach Anspruch 6, 7 oder 8 und einem Bedienelement (14) nach einem der Ansprüche 1 bis 5, wobei die Bedieneinheit (12) eine Senderspule (36) und das Bedienelement (14) eine Empfängerspule (38) aufweist und wobei zur elektrischen Energieversorgung der Bedieneinheit (12) eine Übertragung elektrischer Energie von der Senderspule (36) an die Empfängerspule (38) erfolgt.

**10.** System nach Anspruch 9, wobei das Bedienelement (14) von der Bedieneinheit (12) lösbar und entfernt von der Bedieneinheit (12) verwendbar ist, wobei im Falle einer von der Bedieneinheit (12) entfernten Verwendung Bedienhandlungen kodierende Daten vom Bedienelement (14) zur Bedieneinheit (12) übermittelbar sind,

**11.** System nach Anspruch 10, wobei
die Bedienhandlungen kodierende Daten vom Bedienelement (14) zur Bedieneinheit auf leitungslosem Wege (12) übermittelbar sind.

**12.** System nach Anspruch 10 oder 11, mit jeweils einer von der Bedieneinheit (12) und dem Bedienelement (14) umfassten Sende- und/oder Empfangseinrichtung (36, 38) zur drahtlosen Kommunikation zwischen Bedieneinheit (12) und Bedienelement (14).

**13.** System nach Anspruch 12, wobei die drahtlose Kommunikation eine Funkverbindung und ein Datenübetragungsprotokoll gemäß dem ZigBee-Standard umfasst.

**14.** Haushaltsgerät mit einem Bedienelement (14) nach einem der Ansprüche 1 bis 5 und/oder einer Bedieneinheit (12) nach einem der Ansprüche 6, 7 oder 8 und/oder einem System nach einem der Ansprüche 9 bis 13.
